# EUROPEAN PATENT APPLICATION

(11) **EP 4 725 846 A1**
(43) Date of publication of application: **15.04.2026**
(21) Application number: 25207581.7
(22) Date of filing: 08.10.2025
(51) Int. Cl.: B64D 29/06, E05F 15/622

(54) **ELECTRO-MECHANICAL POWER DOOR OPERATING SYSTEM**

(30) Priority: 08.10.2024 US 202463704961 P
(71) Applicant: Marathonnorco Aerospace, Inc., Waco, TX 76712 (US)
(72) Inventor: TUCKER, Scott, Waco, Texas 76712 (US); BULLOCK, Dean, Waco, Texas 76712 (US)
(74) Representative: E. Blum & Co. AG

(57) **Abstract**

An electro-mechanical power door operating system (100) includes a strut (102) having an inner tube (104) and an outer tube (106); and an electrical actuator (108). The inner tube (104) and the outer tube (106) are in axial alignment and slidable relative to one another in a telescoping manner in response to operation of the electrical actuator (108).

## Description

### CROSS-REFERENCE TO RELATED APPLICATIONS

This application claims the benefit from U.S. Provisional Application No. 63/704,961 filed on October 8, 2024, which is hereby incorporated by reference in its entirety for all purposes as if fully set forth herein.

### FIELD OF THE DISCLOSURE

The disclosure relates to an electro-mechanical power door operating system.

### BACKGROUND OF THE DISCLOSURE

The predominant actuation technology currently used in aircraft and/or aerospace applications, such as a power door operating system (PDOS), is hydraulic. However, a hydraulic actuator system has many inherent problems. For example, a typical hydraulic actuation system has problems such as leaking, high weight penalty, high demand maintenance, higher failure rate, and so on.

Accordingly, it is desirable to have a non-hydraulic power door operating system.

### SUMMARY OF THE DISCLOSURE

In one general aspect, an electro-mechanical power door operating system includes a strut having an inner tube and an outer tube. The electro-mechanical power door operating system also includes an electrical actuator. The electro-mechanical power door operating system furthermore includes where the inner tube and the outer tube are in axial alignment and slidable relative to one another in a telescoping manner in response to operation of the electrical actuator.

Preferred embodiments of the electro-mechanical power door operating system are provided in the dependent claims.

Embodiments of the disclosure are directed to an extendable and retractable strut powered by an electric motor that can be configured, operable, and/or used as a power door operating system (PDOS) for an aircraft nacelle or other aircraft component as described herein (hereinafter "nacelle"). The PDOS system may be used to open and close nacelle doors during ground maintenance of the aircraft, the nacelle, aircraft components located at least partially in and/or on the nacelle, and/or the like. The electric actuation of the strut may be triggered by the use of a control panel by ground maintenance personnel.

In this regard, there are benefits in replacing hydraulic components on future aircraft with electrical equivalents. Current PDOS designs are hydraulic. There currently does not exist a solution for an electrical equivalent to a hydraulic PDOS system.

The electro-mechanical PDOS system includes the outer and the inner tube. The inner tube may be configured for extending and retracting from the outer tube. In a preferred embodiment, the electrical actuator comprises an electric motor and the drive system, wherein the drive system is operated by the electric motor to extend and/or retract the inner tube from the outer tube. Preferably, the drive system preferably comprises one or more of a ball screw configuration, a planetary gear system, a gear system, a transmission configuration, a screw type mechanical linear actuator, a leadscrew, a screw jack, a roller screw, and/or an impacting mechanism.

The extension and retraction of the inner tube relative to the outer tube may be driven by the electric motor attached to an end of the outer tube. The outer tube may include a rod end that is secured to the nacelle. The inner tube also may include a rod end that is secured to the nacelle door. Preferably the inner tube of the strut is attached to the door component with its rod end that pivotally connects to a door fitting. Preferably a bracket or other aircraft component is connected to the rod end of the outer tube and/or the electrical actuator.

The drive system may include a ball screw design in which a cage may travel up and down a threaded portion of the inner tube. This cage may be affixed to the outer tube or a shaft of the electric motor in some manner. In other embodiments, the disclosed system could also include the opposite arrangement where the outer tube moves or rotates around a stationary inner tube.

In one embodiment, the electro-mechanical power door operating system is configured to only operate in an opening direction, and wherein the drive system, the electric motor, and/or a gear system are configured to disengage to the door component to be manually closed by ground maintenance personnel, preferably with a damping mechanism configured to damp and/or slow movement of the inner tube into the outer tube, preferably through a use of a damped hold open rod/s.

In a preferred embodiment, the system further comprises the manual operation device to operate the drive system in order to retract the inner tube into the outer tube. Preferably, the manual operation device comprises a hex drive fitting that connects with the drive system to operate the drive system for manual operation of the strut to open or close.

The disclosed system may include a locking mechanism that is mechanically triggered when the inner tube extends or retracts a certain distance. This mechanical lock may provide a secondary safety feature during nacelle maintenance. The mechanical lock may be disengaged either manually, remotely using a cable and remote release handle, or by some means of electro-mechanical actuation.

Preferably, the control box is located externally to the aircraft structure.

In a different embodiment, the control box is located internally to the aircraft structure.

Preferably, the control box is located vertically lower than the strut.

Preferably, the control box is configured with a lock input device to receive an input from ground maintenance personnel to operate the locking mechanism to lock or to unlock the strut.

Preferably, the control box comprises an output device. In a preferred embodiment, the output device indicates an extended configuration of the strut, a retracted configuration of the strut, a locked configuration of the strut, and/or an unlocked configuration of the strut.

The electro-mechanical system may also include electrical control wires running from a main control box to the struts electric motor. This control panel may be used by ground maintenance personnel to actuate the nacelle door either open or closed.

The electro-mechanical system may also include power cables running from a main power inlet box to the electric motor of the strut. This power inlet box may allow ground maintenance personnel to plug in facility power, which would then power operation of the electro-mechanical system.

The electro-mechanical PDOS may only operate in the opening direction. The gear system could possibly disengage after the locking mechanism is disengaged thus allowing for the nacelle door to be manually closed by ground maintenance or possibly through the use of damped hold open rods.

In the event of power loss, the electro-mechanical PDOS may implement a feature allowing for manual operation of the strut open or closed.

According to another aspect of the present invention, an aircraft is provided comprising an aircraft structure comprising a door component, and an electro-mechanical power door operating system according to any of the previous embodiments.

There has thus been outlined, rather broadly, certain aspects of the disclosure in order that the detailed description thereof herein may be better understood, and in order that the present contribution to the art may be better appreciated. There are, of course, additional aspects of the disclosure that will be described below and which will form the subject matter of the claims appended hereto.

In this respect, before explaining at least one aspect of the disclosure in detail, it is to be understood that the disclosure is not limited in its application to the details of construction and to the arrangements of the components set forth in the following description or illustrated in the drawings. The disclosure is capable of aspects in addition to those described and of being practiced and carried out in various ways. Also, it is to be understood that the phraseology and terminology employed herein, as well as the abstract, are for the purpose of description and should not be regarded as limiting.

As such, those skilled in the art will appreciate that the conception upon which this disclosure is based may readily be utilized as a basis for the designing of other structures, methods, and systems for carrying out the several purposes of the disclosure. It is important, therefore, that the claims be regarded as including such equivalent constructions insofar as they do not depart from the spirit and scope of the disclosure.

### BRIEF DESCRIPTION OF THE DRAWINGS

The attached Figures illustrate preferred embodiments of the present electro-mechanical power door operating system, wherein
Figure 1 illustrates a partial cross-sectional view of an aircraft structure implementing an electro-mechanical power door operating system according to an embodiment of the present invention.
Figure 2 illustrates a further partial cross-sectional view of an aircraft structure implementing an electro-mechanical power door operating system according to Figure 1.
Figure 3 illustrates a partial side view of the electro-mechanical power door operating system according to Figure 1.
Figure 4 illustrates a front perspective view of a control box as used in an embodiment of the present invention.
Figure 5 schematically illustrates a control box and an electrical actuator according to embodiments of the present invention.

### DETAILED DESCRIPTION OF THE DRAWINGS

Embodiments of the present invention will now be described with reference to the drawing figures, in which like reference numerals refer to like parts throughout.

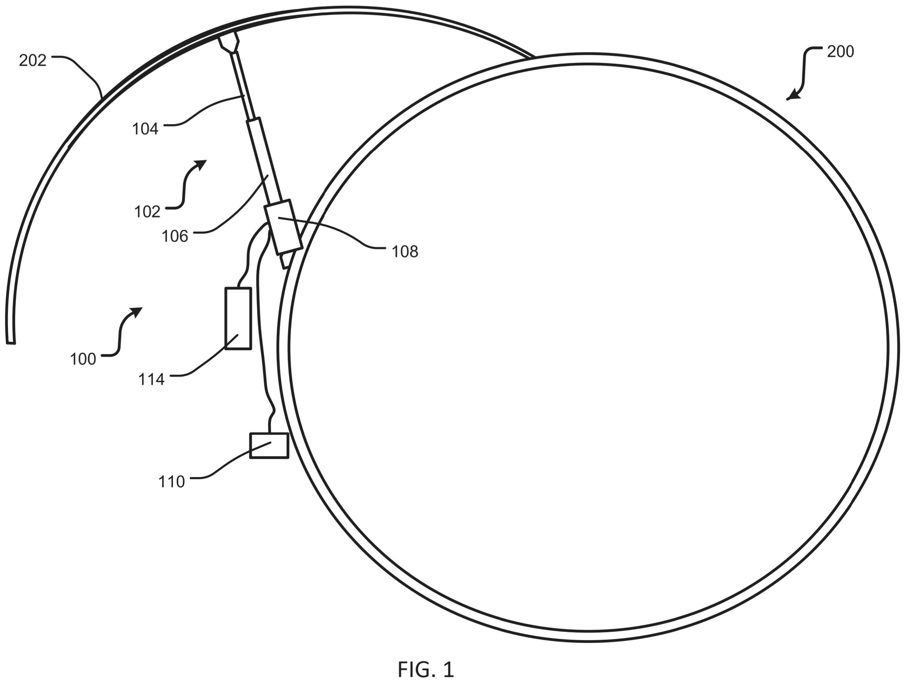

Figure 1 illustrates a partial cross-sectional view of an aircraft structure implementing an electro-mechanical power door operating system according to an embodiment of the present invention.

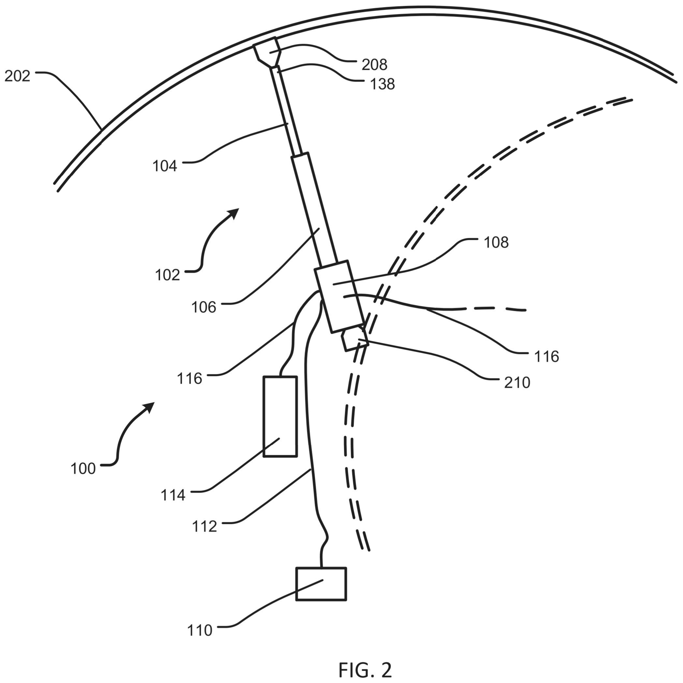

Figure 2 illustrates a further partial cross-sectional view of an aircraft structure implementing an electro-mechanical power door operating system according to Figure 1.

In particular, Figure 1 illustrates a cross-sectional view of an aircraft structure 200 implementing an electro-mechanical power door operating system 100 according to an embodiment of the present invention. In this regard, the electro-mechanical power door operating system 100 may be configured to open, support, and close a door component 202 of the aircraft structure 200.

In particular, the electro-mechanical power door operating system 100 may include a strut 102 and an electrical actuator 108. The strut 102 may include an inner tube 104 and an outer tube 106. The inner tube 104 and the outer tube 106 may be in axial alignment and slidable relative to one another in a telescoping manner in response to operation of the electrical actuator 108.

Further, the electro-mechanical power door operating system 100 may include a control box 110 and operation of the electrical actuator 108 may be in response to operation of the control box 110. Accordingly, ground maintenance personnel may utilize the control box 110 to operate the electrical actuator 108 to control the strut 102 to open, support, and close the door component 202 of the aircraft structure 200. In aspects, the control box 110 may be on the aircraft structure 200, adjacent the aircraft structure 200, on the aircraft, and/or the like. In aspects, the electro-mechanical power door operating system 100 may include a separate access panel. In aspects, the control box 110 may be behind the separate access panel so that the control box 110 may be accessed easily prior to opening the door component 202. In aspects, the separate access panel may include a lock to maintain the separate access panel closed during flight. In aspects, the separate access panel may be opened and/or closed with a tool, a key, and/or the like. In aspects, the control box 110 may be located on the aircraft structure 200 and/or within the door component 202.

With reference to Figure 2, the inner tube 104 of the strut 102 may be attached to the door component 202 with a rod end 138 that pivotally connects to a door fitting 208 or other aircraft component. In aspects, the door fitting 208 may be an aircraft door fitting. The strut 102 may be attached to the aircraft structure 200, such as a part of a fuselage, engine, engine nacelle, and/or the like by a bracket 210 or other aircraft component that is connected to a rod end of the outer tube 106, the electrical actuator 108, and/or the like. A converse attachment orientation is also contemplated by the electro-mechanical power door operating system 100. In further aspects, the strut 102 may include the inner tube 104, the outer tube 106, and one or more additional tubes that may be in axial alignment and slidable relative to one another in a telescoping manner.

Additionally, the electro-mechanical power door operating system 100 may include electrical control wires 112 connecting between the electrical actuator 108 and the control box 110. In particular, the electrical control wires 112 may provide signals between the control box 110 and the electrical actuator 108 to actuate or stop actuating, to open, support, and close the door component 202 of the aircraft structure 200. The signals between the control box 110 and the electrical actuator 108 to open, support, and close the door component 202 of the aircraft structure 200 may be responsive to operation of the control box 110.

The electrical control wires 112 may be configured as an assembly of electrical cables or wires that may transmit signals and/or electrical power. The electrical control wires 112 may be bound together by straps, cable ties, cable lacing, sleeves, shielding, electrical tape, conduit, a weave of extruded string, a combination thereof, and/or the like. The electrical control wires 112 may be fitted with terminals, connector housings, protective sleeves, and/or the like.

The electro-mechanical power door operating system 100 may also include power cables 116 connected to the electrical actuator 108. In aspects, the electro-mechanical power door operating system 100 and/or the electrical actuator 108 may be powered by the aircraft. Further, the electro-mechanical power door operating system 100 may include a main power inlet box 114 to provide power to the electro-mechanical power door operating system 100 and/or the electrical actuator 108. In this regard, the main power inlet box 114 may allow ground maintenance personnel to plug in facility power, which would then power operation of the electro-mechanical power door operating system 100.

The power cables 116 may be configured as an assembly of electrical cables or wires that may transmit signals and/or electrical power. The power cables 116 may be bound together by straps, cable ties, cable lacing, sleeves, shielding, electrical tape, conduit, a weave of extruded string, a combination thereof, and/or the like. The power cables 116 may be fitted with terminals, connector housings, protective sleeves, and/or the like.

In aspects, the door component 202 may be a nacelle, an aircraft nacelle, an aircraft engine nacelle, a door, an aircraft door, an aircraft engine door, a hatch, an access panel, a radome door, a cowl door, a cover, a cowling, a luggage compartment door, other compartment door, and/or the like. In this regard, the electro-mechanical power door operating system 100 is configured to open and close a heavy implementation of the door component 202. In particular, a heavy implementation of the door component 202 may be more than 1,000 pounds, more than 5,000 pounds, more than 15,000 pounds, more than 18,000 pounds, or more than 20,000 pounds.

In aspects, an implementation of the door component 202 may be at least 500 pounds, at least 1000 pounds, at least 1500 pounds, at least 2000 pounds, at least 2500 pounds, at least 3000 pounds, at least 3500 pounds, at least 4000 pounds, at least 4500 pounds, at least 5000 pounds, at least 5500 pounds, at least 6000 pounds, at least 6500 pounds, at least at least 5000 pounds, at least 6000 pounds, at least 7000 pounds, at least 8000 pounds, at least 9000 pounds, at least 10000 pounds, at least 11000 pounds, at least 12000 pounds, at least 13000 pounds, at least 14000 pounds, at least 15000 pounds, at least 16000 pounds, and/or at least 17000 pounds. In aspects, an implementation of the door component 202 may be between 500 pounds and 20000 pounds and ranges therebetween including 500 pounds and 1500 pounds, 1500 pounds and 2500 pounds, 2500 pounds and 3500 pounds, 3500 pounds and 4500 pounds, 4500 pounds and 5500 pounds, 5500 pounds and 6500 pounds, 6500 pounds and 7500 pounds, 7500 pounds and 8500 pounds, 8500 pounds and 9500 pounds, 9500 pounds and 10500 pounds, 10500 pounds and 11500 pounds, 11000 pounds and 12000 pounds, 12000 pounds and 13000 pounds, 13000 pounds and 14000 pounds, 14000 pounds and 15000 pounds, 15000 pounds and 16000 pounds, 16000 pounds and 17000 pounds, 17000 pounds and 18000 pounds, 18000 pounds and 19000 pounds, 19000 pounds and 20000 pounds, and/or 20000 pounds and 21000 pounds. Aspects of the electro-mechanical power door operating system 100 are described herein as being implemented in the aircraft structure 200. However, other aspects of the electro-mechanical power door operating system 100 may be implemented in another type of vehicle such as a bus, a ship, a train, and/or the like.

The strut 102, the inner tube 104, and/or the outer tube 106 may be made from various metallic materials such as aluminum, steel, titanium, and/or the like. Moreover, the strut 102, the inner tube 104, and/or the outer tube 106 may be formed of nonmetallic materials such as Kevlar, carbon fiber, fiberglass, various resins, a polyamide material, including aliphatic polyamides, polypthalamides, aromatic polyamides, carbon fiberglass, another type of thermoplastic compound, and/or the like. Implementation using nonmetallic materials may be preferable in some areas such as a radome to avoid interference with transmission and reception of an associated radar or other radio frequency transmission device.

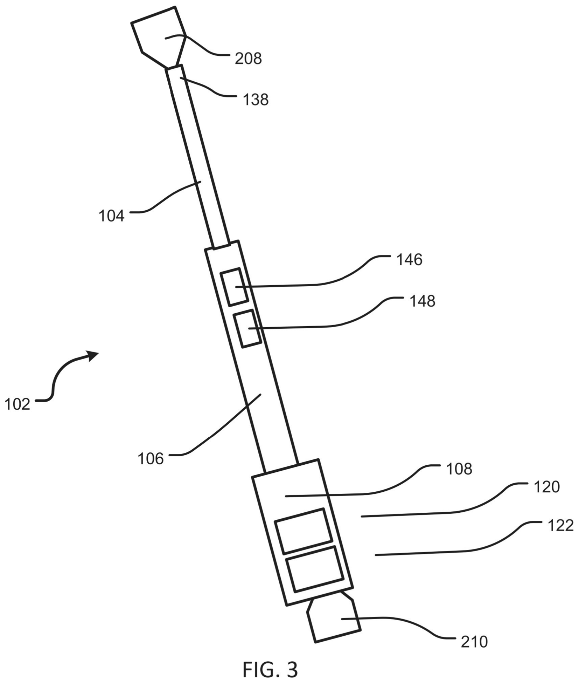

Figure 3 illustrates a partial side view of the electro-mechanical power door operating system according to Figure 1.

In particular, Figure 3 illustrates a partial side view of the electro-mechanical power door operating system 100 according to Figure 1. In this regard, the electrical actuator 108 may further include an electric motor 122 and a drive system 120. The drive system 120 may be operated by the electric motor 122 to extend and/or retract the inner tube 104 from the outer tube 106. In one aspect, the electric motor 122 may be an in-line electric motor.

In one aspect, the electric motor 122 may include one or more of a rotor, bearings, stator, air gap, windings, commutator, and/or the like. In one or more aspects, the electric motor 122 may be implemented as self-commutated motor, brushed DC, motor, electrically excited DC motor, permanent magnet DC motor, electronic commutator (EC) motor, brushless DC motor, switched reluctance motor, universal AC-DC motor, externally commutated AC machine, induction motor, cage and wound rotor induction motor, torque motor, synchronous motor, doubly-fed electric machine, or the like. In one or more aspects, the electric motor 122 may include a transmission, a clutch, a linkage, driveshafts, and/or the like. In some aspects, the transmission may be configured to amplify a torque/force of the electric motor 122. In some aspects, the transmission may be configured to amplify a torque/force of the electric motor 122 utilizing a mechanical linear actuator.

In aspects, the drive system 120 may be implemented with a ball screw configuration, a planetary gear system, a gear system, a transmission configuration, a screw type mechanical linear actuator, a leadscrew, a screw jack, a roller screw, an impacting mechanism and/or the like to extend and/or retract the inner tube 104 from the outer tube 106 in response to operation of the electric motor 122.

In one aspect, the drive system 120 may include a ball screw configuration that may implement a cage that may travel up and down a threaded portion of the inner tube 104. The cage may be affixed to the electro-mechanical power door operating system 100 and/or a shaft of the electric motor 122, and/or the like. In other aspects, the drive system 120 may be configured such that the outer tube 106 moves or rotates around a stationary implementation of the inner tube 104.

In aspects, the electro-mechanical power door operating system 100 may only operate in the opening direction. In this regard, the drive system 120, the electric motor 122, a gear system, and/or the like may disengage after the locking mechanism 146 is disengaged thus allowing the door component 202 to be manually closed by ground maintenance personnel or possibly through the use of damped hold open rods.

In aspects, the strut 102 may include a damping mechanism 148. The damping mechanism 148 may damp and/or slow movement of the inner tube 104 into the outer tube 106. In aspects, the damping mechanism 148 may include braking components configured and/or operable to engage portions and/or surfaces of the inner tube 104 and/or the outer tube 106 to slow movement the inner tube 104 into the outer tube 106.

Further, the electro-mechanical power door operating system 100 may include a manual operation device to operate the drive system 120 in order to retract the inner tube 104 into the outer tube 106. Accordingly, in the event of power loss, the electro-mechanical power door operating system 100 may implement the manual operation device to allow for manual operation of the strut 102 to open or close.

In aspects, the manual operation device may be a drive fitting that connects with the drive system 120 to operate the drive system 120 for manual operation of the strut 102 to open or close. In particular aspects, the manual operation device may be a hex drive fitting that connects with the drive system 120 to operate the drive system 120 for manual operation of the strut 102 to open or close. In this regard, ground maintenance personnel may utilize a socket bit to drive the drive fitting, such as the hex drive fitting to operate the drive system 120 for manual operation of the strut 102 to open or close. In other aspects, a handle, a lever, a wheel, and/or the like may be provided to allow for manual operation, such as rotation, operate the drive system 120 for manual operation of the strut 102 to open or close.

Further, the electro-mechanical power door operating system 100 may include a locking mechanism 146 that may be configured to lock a movement of the strut 102 including the inner tube 104 and the outer tube 106. In aspects, the electro-mechanical power door operating system 100 and/or the control box 110 may be configured to actuate the locking mechanism 146. The electro-mechanical power door operating system 100 may be configured to operate the locking mechanism 146 without the need to directly interact with the locking mechanism 146.

In aspects, the locking mechanism 146 may be mechanically triggered when the inner tube 104 extends or retracts a certain distance from the outer tube 106. The locking mechanism 146 may provide a secondary safety feature during maintenance of the aircraft structure 200. The locking mechanism 146 may be disengaged either manually, remotely using a cable and remote release handle, or by some means of electro-mechanical actuation.

In one aspect, the locking mechanism 146 may include a lock actuator and electrical control wires 112 that connect the electrical actuator 108 to the lock actuator to operate the locking mechanism 146.

The control box 110 may be located externally to the aircraft structure 200 or may be located internally to the aircraft structure 200. Moreover, the control box 110 may be located vertically lower than the strut 102 in order to make it more easily accessible by ground maintenance personnel. In particular, the control box 110 may be positioned such that ground maintenance personnel standing on ground level may operate the control box 110 for operation of the strut 102, the locking mechanism 146, and/or the like. In aspects, the control box 110 may be located less than eight feet from ground level, less than seven feet from ground level, and/or less than six feet from ground level.

As illustrated in Figure 1, the control box 110 is located vertically below the strut 102. In one aspect, the control box 110 is located at a first vertical position, the strut 102 is located at a second vertical position, the first vertical position being vertically lower than the second vertical position. In one aspect, the electrical actuator 108 is located at a first vertical position, the strut 102 located at a second vertical position, the first vertical position being vertically lower than the second vertical position.

In one aspect, the lock actuator may interact with and move the locking mechanism 146 from a non-unlocking position to an unlocking position. In other words, movement of the lock actuator actuates the locking mechanism 146 in response to operation by ground maintenance personnel of the electro-mechanical power door operating system 100 and/or the control box 110.

In one aspect, the electro-mechanical power door operating system 100 may be configured such that operation of the control box 110 by ground maintenance personnel may generate control signals transmitted over the electrical control wires 112 and sent to the lock actuator. Subsequently the lock actuator may move the locking mechanism 146 of the strut 102 to an unlocking position. In other words, operating the control box 110 unlocks the strut 102. In another aspect, the electro-mechanical power door operating system 100 may be configured such that operation of the control box 110 by ground maintenance personnel may generate control signals transmitted over the electrical control wires 112 and sent to the lock actuator. Subsequently the lock actuator may move the locking mechanism 146 of the strut 102 to a locking position. In other words, operating the control box 110 locks the strut 102.

As shown in Figure 1, the door component 202 may swing open and upwards via a hinge or similar structure allowing movement of the door component 202. Other movements of the door component 202 are contemplated as well. In response to the door component 202 being opened, the inner tube 104 may telescope out from the outer tube 106. In one aspect, the door component 202 may be configured to close at least by gravity acting on the door component 202. In one aspect, the strut 102 maintains the door component 202 in an open position with a lock providing resistance on the inner tube 104 to prevent the inner tube 104 from sliding into the outer tube 106.

Figure 1 further illustrates that the elevated position of the door component 202 likewise elevates the position of the strut 102. The locking mechanism 146 of the strut 102 is likewise elevated. Accordingly, the operation of the locking mechanism 146 may be more difficult for ground maintenance personnel to operate and/or reach easily. On the other hand, the electro-mechanical power door operating system 100 and, in particular, the control box 110 may be vertically located lower than the strut 102. Accordingly, ground maintenance personnel can more easily operate the control box 110, that controls the electrical actuator 108 and/or the lock actuator to operate the locking mechanism 146 such that the strut 102 may be unlocked and/or the door component 202 to open or close.

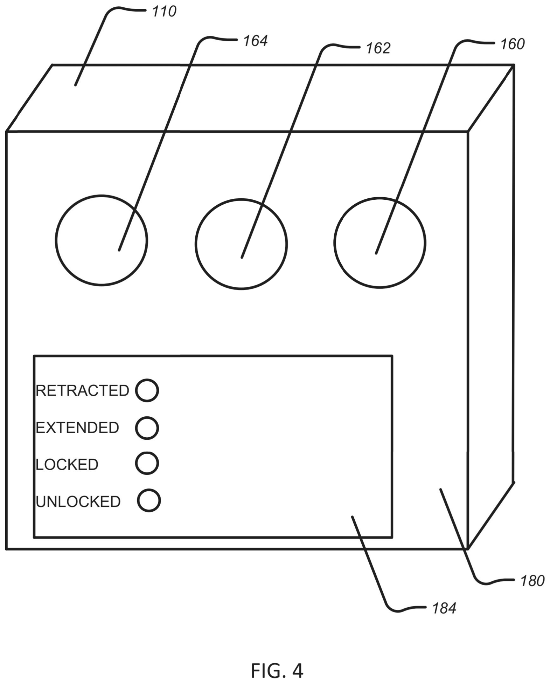

Figure 4 illustrates a front perspective view of a control box as used in an embodiment of the system according to the present invention.

In particular, Figure 4 illustrates a front perspective view of the control box 110 according to one aspect of the disclosure. The control box 110 may be configured with an extend strut input device 164 to receive an input from ground maintenance personnel to the control box 110 to operate the electrical actuator 108 to extend the strut 102.

The control box 110 may be configured with a retract strut input device 162 to receive an input from ground maintenance personnel to the control box 110 to operate the electrical actuator 108 to retract the strut 102.

The control box 110 may be configured with a lock input device 160 to receive an input from ground maintenance personnel to operate the locking mechanism 146 to lock or to unlock the strut 102.

In one aspect, the extend strut input device 164, the retract strut input device 162, and the lock input device 160 may be one or more of a mechanical switch, a key switch, a human machine interface, and/or the like. In some aspects, the input device may be a manually operated electromechanical device with one or more sets of electrical contacts. Each set of contacts can be in one of two states: either "closed" meaning the contacts are touching and electricity can flow between them, or "open," meaning the contacts are separated and the switch is non-conducting. The mechanism actuating the transition between these two states (open or closed) may be either an "alternate action" (flip switch for continuous "on" or "off") or "momentary" (push for "on" and release for "off") type switch.

The extend strut input device 164, the retract strut input device 162, the lock input device 160 may be configured with a circuit to reduce contact bounce. In one aspect, the circuit to reduce contact bounce may be a low-pass filter to reduce or eliminate multiple pulses. In one aspect, the circuit to reduce contact bounce may include taking multiple samples of the contact state at a low rate that are examined for a steady sequence. In one aspect, the circuit to reduce contact bounce may be configured to receive signals to be filtered out using a SR flip-flop (latch), Schmitt trigger, or the like.

The extend strut input device 164, the retract strut input device 162, the lock input device 160 may be configured with an actuator that includes a moving part that applies the operating force to the contacts and may be implemented as a toggle, dolly, a rocker, a push-button, a rotary switch, a keyed switch, any type of mechanical linkage, and/or the like.

As shown in Figure 4, the extend strut input device 164, the retract strut input device 162, and the lock input device 160 are buttons. The extend strut input device 164, the retract strut input device 162, and the lock input device 160 may be arranged in a housing 180. In one aspect, the extend strut input device 164, the retract strut input device 162, and the lock input device 160 may be implemented as buttons that may have a surface that is flush or recessed with respect to a surface of the housing 180 to avoid inadvertent operation of the retract strut input device 162, the extend strut input device 164, and the lock input device 160. In other words, the surface of the button may be flush with the surface of the housing 180 or the surface of the button may be recessed into the surface of the housing 180. Accordingly, actuation of the button may require ground maintenance personnel to press the button into the housing 180. Of course, other implementations are contemplated as well. Moreover, the housing 180 may further house any of the components of the electrical actuator 108.

The housing 180 may be implemented as a protective case for the control box 110. In one aspect, the housing 180 may be hermetically sealed to prevent intrusion of foreign objects, liquids, and/or the like. In one aspect, the housing 180 may be waterproof, watertight, and/or water resistant to prevent intrusion of water and other liquids present in the environment of the housing 180 and the vehicle. In this regard, the housing 180 may include one or more seals, gaskets, adhesives, waterproof coatings, potting materials, and/or the like. These aspects may be implemented for applications in extreme outdoor environments for protection of the electrical actuator 108.

The control box 110 may further include an output device 184. The output device 184 may include any type of output including lights, sounds, alphanumeric display, and/or the like. As shown by the exemplary implementation of the output device 184 in Figure 4, the output device 184 includes lights indicating an extended configuration of the strut 102, a retracted configuration of the strut 102, a locked configuration of the strut 102, an unlocked configuration of the strut 102, and/or the like. In aspects, the control box 110 may additionally send to the cockpit, an aircraft maintenance system, and/or the like a status transmission indicating an extended configuration of the strut 102, a retracted configuration of the strut 102, a locked configuration of the strut 102, an unlocked configuration of the strut 102, and/or the like.

Additionally, the control box 110 may include a support such as bracket and/or the like to mount the control box 110 to a support structure such as an internal component of the aircraft structure 200, an external component of the aircraft structure 200, a hard point, a frame, or the like. In other aspects, the control box 110 may not include a support or the bracket and may otherwise be mounted to a support structure. In yet other aspects, the control box 110 may not be mounted to a support structure and may be freely suspended. In further aspects, it is contemplated that any support may take any configuration to support the electrical actuator 108.

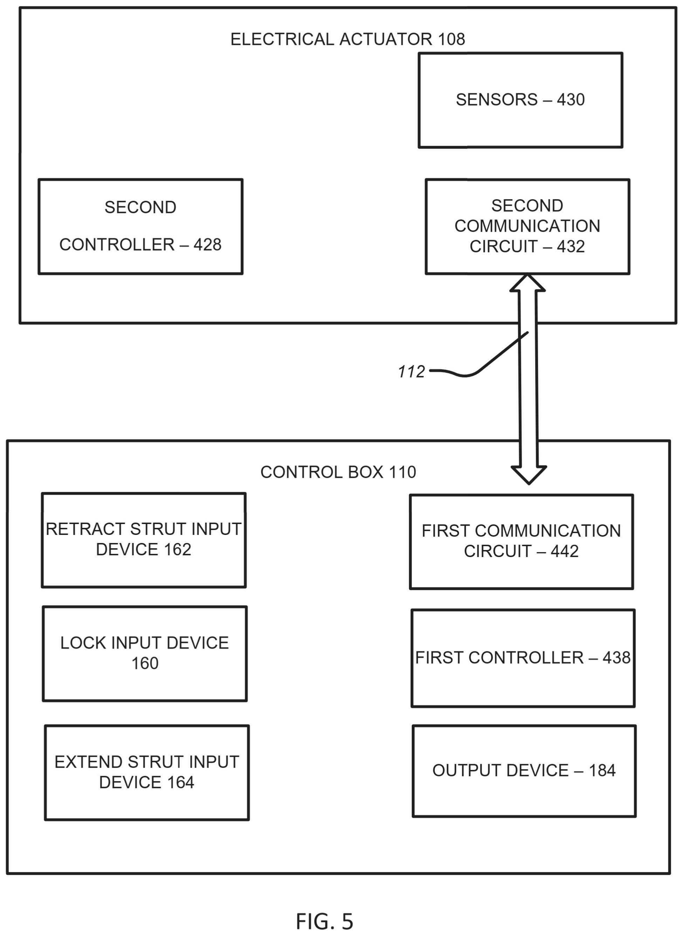

Figure 5 schematically illustrates a control box and an electrical actuator as used in systems according to embodiments of the present invention.

In particular, Figure 5 schematically illustrates the control box 110 and the electrical actuator 108 according to aspects of the disclosure. As further illustrated in Figure 5, the electrical actuator 108 may include the lock input device 160 and the lock actuator may include a solenoid/motor having a linkage. The linkage may include gears, levers, a gear train, a cable, and/or the like.

In operation, the electro-mechanical power door operating system 100 may be configured to receive an input at the control box 110 from ground maintenance personnel to extend, retract, lock, or unlock the strut 102 by input to the extend strut input device 164, the retract strut input device 162, or the lock input device 160. The control box 110 may communicate the input received by the extend strut input device 164, the retract strut input device 162, or the lock input device 160 over the electrical control wires 112 to the electrical actuator 108 or to the lock actuator of the locking mechanism 146. The lock actuator may receive the input communication from the electrical actuator 108 and control the solenoid/motor to place the locking mechanism 146 of the strut 102 in the unlocked configuration.

In one aspect, the lock actuator may be implemented as a solenoid/motor that may be a solenoid that moves the locking mechanism 146 of the strut 102 from the locked configuration to the unlocked configuration. In one aspect, the solenoid may include a coil of wire wrapped around a soft iron core, an iron yoke, which provides a low reluctance path for magnetic flux, and a movable iron armature that may connect to a linkage that operates the locking mechanism 146. However, the solenoid may be implemented using any known technology including an electromechanical solenoid, rotary solenoid, rotary voice coil solenoid, and/or the like.

In one aspect, the solenoid/motor may be a motor that moves the locking mechanism 146 of the strut 102 from the locked configuration to the unlocked configuration. In one or more aspects, the motor may include one or more of a rotor, bearings, stator, air gap, windings, commutator, and/or the like. In one or more aspects, the motor may be implemented as self-commutated motor, brushed DC, motor, electrically excited DC motor, permanent magnet DC motor, electronic commutator (EC) motor, brushless DC motor, switched reluctance motor, universal AC-DC motor, externally commutated AC machine, induction motor, cage and wound rotor induction motor, torque motor, synchronous motor, doubly-fed electric machine, or the like. In one or more aspects, the motor may include a transmission, a linkage, driveshafts, and/or the like that operate, in response to movement of the solenoid/motor, to move and control the locking mechanism 146. In some aspects, the transmission may be configured to amplify a torque/force of the solenoid/motor. In some aspects, the transmission may be configured to amplify a torque/force of the solenoid/motor utilizing a mechanical linear actuator. The mechanical linear actuator may include a screw type mechanical linear actuator. The screw type mechanical linear actuator may be implemented as a leadscrew, a screw jack, a ball screw, a roller screw, or the like. In some aspects, the transmission may be configured as an impacting mechanism. The impacting mechanism may include a rotating mass that may be accelerated by the solenoid/motor to store energy that is periodically connected to the output shaft to generate a high-torque impact.

The lock actuator may be arranged in a housing. In one aspect, the housing that houses the lock actuator may be attached to the strut 102. In one aspect, the housing that houses the lock actuator may be attached adjacent the strut 102. In one aspect, the housing that houses the lock actuator may be arranged externally to the strut 102. In one aspect, the housing that houses the lock actuator may be implemented internally to the strut 102. The housing may be implemented as a protective case for the lock actuator. In one aspect, the housing may be hermetically sealed to prevent intrusion of foreign objects, liquids, and/or the like. In one aspect, the housing may be waterproof, watertight, and or water resistant to prevent intrusion of water and other liquids present in the environment of the housing and the vehicle. In this regard, the housing may include one or more seals, gaskets, adhesives, waterproof coatings, potting materials, and/or the like. These aspects may be implemented for applications in extreme outdoor environments for protection thereof.

The electro-mechanical power door operating system 100 may further include a power source. The power source may include one or more batteries, a power connection to an external power supply, a connection to a power source associated with the lock actuator, a power source associated with an aircraft, a power source associated with a building, and/or the like. The power source may further include one or more circuits that may include one or more of a rectifier, a DC to DC converter, a transformer, a voltage regulator, fuses, a ground fault circuit interrupter, and/or the like to provide a steady, safe, and reliable source of power to the electro-mechanical power door operating system 100.

The control box 110 may further include a first controller 438. The first controller 438 may be configured to sense operation of the extend strut input device 164, the retract strut input device 162, or the lock input device 160, configured to control operation of the output device 184, configured to control operation of the power source, control operation of a first communication circuit 442, receive sensor readings from a sensor 430, and/or the like. The first controller 438 may be implemented as a hardwired circuit, a processor, or the like. In some aspects, the first controller 438 may be implemented with software, a program, or the like to provide implementation of the features described in the disclosure. In some aspects, the first controller 438 may be a computing device as defined herein.

The electrical actuator 108 may include a second controller 428. The second controller 428 may be configured to sense and control operation of the strut 102, the inner tube 104, the outer tube 106, the locking mechanism 146, the electric motor 122, the drive system 120, and/or the like, control operation of a second communication circuit 432, receive sensor readings from one or more sensors 430, and/or the like. The second controller 428 may be implemented as a hardwired circuit, a processor, or the like. In some aspects, the second controller 428 may be implemented with software, a program, and/or the like to provide implementation of the features described in the disclosure. In some aspects, the first controller 438 may be a computing device as defined herein.

The first communication circuit 442 may be configured to connect to the electrical control wires 112 and transmit/receive communication signals with a second communication circuit 432. Likewise, the second communication circuit 432 may be configured to connect to the electrical control wires 112 and transmit/receive communication signals with a first communication circuit 442.

The sensors 430 may include a position sensor to determine a position of the locking mechanism 146, a position of the strut 102, a position of the door component 202, the state of the strut 102, the state of the locking mechanism 146 (locked versus unlocked), or the like. The position sensor may be one or more of a capacitive transducer, capacitive displacement sensor, eddy-current sensor, grating sensor, hall effect sensor, inductive non-contact position sensors, linear variable differential transformer (LVDT), multi-axis displacement transducer, photodiode array, piezo-electric transducer (piezo-electric), potentiometer, proximity sensor (optical), rotary encoder (angular), string potentiometer, or the like.

In some aspects, the first controller 438 and/or the second controller 428 may be configured to control the strut 102, the inner tube 104, the outer tube 106, the locking mechanism 146, the electric motor 122, the drive system 120, and/or the like based on output from the one or more sensors 430 that detects a position of the strut 102, the inner tube 104, the outer tube 106, the locking mechanism 146, the electric motor 122, the drive system 120, and/or the like. In some aspects, the first controller 438 and/or the second controller 428 may be configured to provide a status of the strut 102, the inner tube 104, the outer tube 106, the locking mechanism 146, the electric motor 122, the drive system 120, and/or the like based on output from the one or more sensors 430. The status may be provided to the cockpit, the aircraft maintenance system, and/or the like.

The output device 184 may be arranged in and/or on the housing 180 of the electrical actuator 108. The output device 184 may output a status of the strut 102. The status may include strut extended, strut extending, strut retracting, strut retracted, strut locked, strut unlocked, and/or the like. In one aspect, the output device 184 may include a light, such as a light emitting diode, indicating that the strut 102 is locked. In one aspect, the output device 184 may include a light, such as a light emitting diode, indicating that the strut 102 is unlocked. The lights may include various colors to indicate the status. For example, unlocked may include a red light and locked may include a green light indicative of the status.

The output device 184 may output a status of the strut 102 with a sound. The status may include locked, unlocked, and/or the like. In one aspect, the output device 184 may output a first sound indicating that the strut 102 is locked. In one aspect, the output device 184 may output a second sound indicating that the strut 102 is unlocked. For example, after pressing the lock input device 160, it may be beneficial for the output device 184 to output a sound indicating that the door component 202 may be closing and for ground maintenance personnel to step clear of the closing door. In one aspect, the output may be a verbal warning to step clear of the closing door. The verbal warning may be configured in one or more multiple languages.

In some aspects, the first controller 438 and/or the second controller 428 may include a timer and/or delay function. In aspects, after ground maintenance personnel have pressed the lock input device 160, it may beneficial for the first controller 438 and/or the second controller 428 to delay operation of the lock actuator, and in particular the solenoid/motor, from unlocking the strut 102 to allow time for ground maintenance personnel to step clear of the closing door component 202. Likewise, in aspects, after ground maintenance personnel have pressed the retract strut input device 162, the first controller 438 and/or the second controller 428 may be configured and/or operable to delay operation of the drive system 120 and/or the electric motor 122 to allow time for ground maintenance personnel to step clear of the closing door component 202.

In aspects, the lock actuator may be engaged with the strut 102 through a linkage and movement of the linkage in response to operation of the solenoid/motor may place the locking mechanism 146 in the unlocked position or the non-unlocked position. In some aspects, the linkage may include one or more gears, a gear train, levers, cables, and/or the like. In one aspect, the linkage may include a cable between the lock actuator and the locking mechanism 146. The cable may be implemented as a Bowden cable that may include a flexible cable to transmit mechanical force or energy by the movement of an inner cable relative to a hollow outer cable housing. The housing may include a composite construction with an inner lining, a longitudinally incompressible layer such as a helical winding or a sheaf of steel wire, and a protective outer covering. The linear movement of the inner cable may transmit a push/pull force to the locking mechanism 146 of the strut 102. Moreover, the cable may include one or more components configured for adjusting the cable tension using an inline hollow bolt, barrel adjuster, or the like. The components may be configured such that they lengthen or shorten the cable housing relative to a fixed anchor point. Lengthening the housing tightens the cable; and shortening the housing loosens the cable.

In one aspect, the locking mechanism 146 may be implemented consistent with United States patent application number 14/663,227, filed March 19, 2015 (title - "Pull Then Lift Lock Mechanism") owned by the assignee of the disclosure and incorporated by reference herein in its entirety.

In one aspect, the locking mechanism 146 may be implemented consistent with United States patent application number 12/857,947, filed August 17, 2010 (title - "Mechanically Dampening Hold Open Rod") owned by the assignee of the disclosure and incorporated by reference herein in its entirety.

In one aspect, the locking mechanism 146 may be implemented consistent with United States patent application number 13/323,355, filed December 12, 2011 (title - "Carbon Fiber Hold Open Rod") owned by the assignee of the disclosure and incorporated by reference herein in its entirety.

In one aspect, the locking mechanism 146 may be implemented consistent with United States patent application number 13/314,982, filed December 8, 2011 (title - "Reinforced Plastic Locking Dogs") owned by the assignee of the disclosure and incorporated by reference herein in its entirety.

In one aspect, the locking mechanism 146 may be implemented consistent with United States patent application number 13/397,320, filed February 15, 2012 (title - "Hold Open Rod Vibration Dampening System") owned by the assignee of the disclosure and incorporated by reference herein in its entirety.

In one aspect, the locking mechanism 146 may be implemented consistent with United States patent application number 13/345,239, filed January 6, 2012 (title - "Internal Locking Mechanism For A Hold Open Rod") owned by the assignee of the disclosure and incorporated by reference herein in its entirety.

The electro-mechanical power door operating system 100, the strut 102, the inner tube 104, the outer tube 106, the locking mechanism 146, the electric motor 122, the drive system 120, and/or any other component of the disclosure may include Built-in test equipment (BITE). The Built-in test equipment (BITE) may be configured to address fault management and include diagnostic equipment built into airborne systems to support maintenance processes. The Built-in test equipment (BITE) may include sensors, multimeters, oscilloscopes, discharge probes, frequency generators, the one or more sensors 430, and/or the like to enable testing and perform diagnostics. The Built-in test equipment (BITE) may include the detection of the fault, the accommodation of the fault (how the system actively responds to the fault), the annunciation or logging of the fault to warn of possible effects and/or aid in troubleshooting the faulty equipment, or the like.

The following are a number of nonlimiting EXAMPLES of aspects of the disclosure.

One EXAMPLE includes: an electro-mechanical power door operating system that may include a strut having an inner tube and an outer tube. The electro-mechanical power door operating system may also include an electrical actuator. The electro-mechanical power door operating system may furthermore include where the inner tube and the outer tube are in axial alignment and slidable relative to one another in a telescoping manner in response to operation of the electrical actuator.

The above-noted EXAMPLE may further include any one or a combination of more than one of the following EXAMPLES:

The electro-mechanical power door operating system may include a control box and operation of the electrical actuator is in response to operation of the control box, where ground maintenance personnel utilize the control box to operate the electrical actuator to control the strut to open, support, and close the door component of the aircraft structure. The electro-mechanical power door operating system also may include electrical control wires connecting between the electrical actuator and the control box, where the electrical control wires provide signals between the control box and the electrical actuator to open, support, and close the door component of the aircraft structure. The electro-mechanical power door operating system further may include a locking mechanism configured to lock a movement of the strut. The electro-mechanical power door operating system in addition includes where the control box is configured to actuate the locking mechanism. The electro-mechanical power door operating system moreover includes where the locking mechanism is mechanically triggered when the inner tube extends or retracts a certain distance from the outer tube. The electro-mechanical power door operating system also includes where the control box are configured with a lock input device to receive an input from ground maintenance personnel to operate the locking mechanism to lock or to unlock the strut. The electro-mechanical power door operating system further includes where the control box is located externally to the aircraft structure. The electro-mechanical power door operating system in addition includes where the control box is located internally to the aircraft structure. The electro-mechanical power door operating system moreover includes where the control box is located vertically lower than the strut. The electro-mechanical power door operating system also includes where the control box is configured with an extend strut input device to receive an input from ground maintenance personnel to the control box to operate the electrical actuator to extend the strut. The electro-mechanical power door operating system further includes where the control box are configured with a retract strut input device to receive an input from ground maintenance personnel to the control box to operate the electrical actuator to retract the strut. The electro-mechanical power door operating system in addition includes where the control box may include an output device. The electro-mechanical power door operating system moreover includes where the output device indicates an extended configuration of the strut, a retracted configuration of the strut, a locked configuration of the strut, and/or an unlocked configuration of the strut. The electro-mechanical power door operating system also includes where the inner tube of the strut is attached to the door component with a rod end that pivotally connects to a door fitting. The electro-mechanical power door operating system further includes where a bracket or other aircraft component is connected to a rod end of the outer tube and/or the electrical actuator. The electro-mechanical power door operating system in addition may include power cables connected to the electrical actuator, where the electro-mechanical power door operating system and/or the electrical actuator are powered by an aircraft. The electro-mechanical power door operating system moreover may include a main power inlet box to provide power to the electro-mechanical power door operating system and/or the electrical actuator, where the main power inlet box is configured to allow ground maintenance personnel to plug in facility power. The electro-mechanical power door operating system also includes where the door component may include a nacelle, an aircraft nacelle, an aircraft engine nacelle, a door, an aircraft door, an aircraft engine door, a hatch, an access panel, a radome door, a cowl door, a cover, a cowling, a luggage compartment door, and/or other compartment door. The electro-mechanical power door operating system further includes where the strut, the inner tube, and/or the outer tube are made of aluminum, steel, and/or titanium. where the strut, the inner tube, and/or the outer tube are made of Kevlar, carbon fiber, fiberglass, various resins, a polyamide material, including aliphatic polyamides, polypthalamides, aromatic polyamides, carbon fiberglass, and/or another type of thermoplastic compound. The electro-mechanical power door operating system in addition includes where the electrical actuator may include an electric motor and a drive system, where the drive system is operated by the electric motor to extend and/or retract the inner tube from the outer tube. The electro-mechanical power door operating system moreover includes where the drive system may include a ball screw configuration, a planetary gear system, a gear system, a transmission configuration, a screw type mechanical linear actuator, a leadscrew, a screw jack, a roller screw, and/or an impacting mechanism. The electro-mechanical power door operating system also includes where the drive system may include a ball screw configuration having a cage configured to travel up and down a threaded portion of the inner tube. The electro-mechanical power door operating system further includes where the electro-mechanical power door operating system is configured to only operate in an opening direction; and where the drive system, the electric motor, and/or a gear system are configured to disengage to the door component to be manually closed by ground maintenance personnel. The electro-mechanical power door operating system in addition includes where the electro-mechanical power door operating system is configured to only operate in an opening direction; and where the drive system, the electric motor, and/or a gear system are configured to disengage to the door component to be manually closed by ground maintenance personnel through a use of a damped hold open rods. The electro-mechanical power door operating system moreover includes where the electro-mechanical power door operating system is configured to only operate in an opening direction; and where the drive system, the electric motor, and/or a gear system are configured to disengage to the door component to be manually closed by ground maintenance personnel with a damping mechanism configured to damp and/or slow movement of the inner tube into the outer tube. The electro-mechanical power door operating system also includes may include a manual operation device to operate the drive system in order to retract the inner tube into the outer tube. The electro-mechanical power door operating system further includes where the manual operation device may include a hex drive fitting that connects with the drive system to operate the drive system for manual operation of the strut to open or close.

Accordingly, the disclosure has provided a non-hydraulic power door operating system that addresses the inherent problems with a typical hydraulic actuation system such as leaking, high weight penalty, high demand maintenance, higher failure rate, and so on.

The many features and advantages of embodiments of the present invention are apparent from the detailed specification, and, thus, it is intended by the appended claims to cover all such features and advantages of the disclosure, which fall within the true spirit, and scope of the disclosure. Further, since numerous modifications and variations will readily occur to those skilled in the art, it is not desired to limit the disclosure to the exact construction and operation illustrated and described, and, accordingly, all suitable modifications and equivalents may be resorted to that fall within the scope of the disclosure.

## Claims

1. An electro-mechanical power door operating system (100) configured to open, support, and close a door component (202) of an aircraft structure (200) comprising:
a strut (102) comprising an inner tube (104) and an outer tube (106); and
an electrical actuator (108),
wherein the inner tube (104) and the outer tube (106) are in axial alignment and slidable relative to one another in a telescoping manner in response to operation of the electrical actuator (108); and
the electro-mechanical power door operating system (100) further comprising at least one of the following: a manual operation device to operate a drive system (120) in order to retract the inner tube (104) into the outer tube (106); and/or a controller configured and/or operable with a delay function to delay closing the door component (202).

2. The electro-mechanical power door operating system (100) according to claim 1 further comprising a control box (110) configured to operate the electrical actuator (108),
Preferably wherein ground maintenance personnel utilize the control box (110) to operate the electrical actuator (108) to control the strut (102) to open, support, and close the door component (202) of the aircraft structure (200).

3. The electro-mechanical power door operating system (100) according to claim 1 or claim 2 wherein the inner tube (104) of the strut (102) is attached to the door component (202) with a rod end (138) that pivotally connects to a door fitting; and wherein a bracket or other aircraft component is connected to a rod end of the outer tube (106) and/or the electrical actuator (108).

4. The electro-mechanical power door operating system (100) according to any of the preceding claims further comprising electrical control wires (112) connecting between the electrical actuator (108) and the control box (110), wherein the electrical control wires (112) provide signals between the control box (110) and the electrical actuator (108) to open, support, and close the door component (202) of the aircraft structure (200).

5. The electro-mechanical power door operating system according to any of the preceding claims further comprising power cables (116) connected to the electrical actuator (108),
wherein the electro-mechanical power door operating system (100) and/or the electrical actuator (108) are powered by an aircraft.

6. The electro-mechanical power door operating system (100) according to any of the preceding claims further comprising a main power inlet box (114) to provide power to the electro-mechanical power door operating system (100) and/or the electrical actuator (108),
wherein the main power inlet box (114) is configured to allow ground maintenance personnel to plug in facility power.

7. The electro-mechanical power door operating system (100) according to any of the preceding claims wherein the door component (202) comprises one or more of a nacelle, an aircraft nacelle, an aircraft engine nacelle, a door, an aircraft door, an aircraft engine door, a hatch, an access panel, a radome door, a cowl door, a cover, a cowling, a luggage compartment door, and/or other compartment door.

8. The electro-mechanical power door operating system (100) according to any of the preceding claims wherein the strut (102), the inner tube (104), and/or the outer tube (106) are made of aluminum, steel, and/or titanium,
wherein the strut (102), the inner tube (104), and/or the outer tube (106) are made of one or more of Kevlar, carbon fiber, fiberglass, various resins, a polyamide material, including aliphatic polyamides, polypthalamides, aromatic polyamides, carbon fiberglass, and/or another type of thermoplastic compound.

9. The electro-mechanical power door operating system (100) according to any of the preceding claims wherein the electrical actuator (108) comprises an electric motor and the drive system (120), wherein the drive system (120) is operated by the electric motor to extend and/or retract the inner tube (104) from the outer tube (106); and wherein the drive system (120) preferably comprises one or more of a ball screw configuration, a planetary gear system, a gear system, a transmission configuration, a screw type mechanical linear actuator, a leadscrew, a screw jack, a roller screw, and/or an impacting mechanism.

10. The electro-mechanical power door operating system according to any of the preceding claims further comprising the manual operation device to operate the drive system (120) in order to retract the inner tube (104) into the outer tube (106); and wherein the manual operation device preferably comprises a hex drive fitting that connects with the drive system (120) to operate the drive system (120) for manual operation of the strut (102) to open or close.

11. The electro-mechanical power door operating system (100) according to any of the preceding claims further comprising a locking mechanism (146) configured to lock a movement of the strut (102).

12. The electro-mechanical power door operating system (100) according to claim 11 wherein the control box (110) is configured to actuate the locking mechanism (146).

13. The electro-mechanical power door operating system (100) according to claim 2 wherein the control box (110) is configured with an extend strut input device (164) to receive an input from ground maintenance personnel to the control box (110) to operate the electrical actuator (108) to extend the strut (102).

14. The electro-mechanical power door operating system (100) according to claim 2 wherein the control box (110) is configured with a retract strut input device (162) to receive an input from ground maintenance personnel to the control box (110) to operate the electrical actuator (108) to retract the strut (102).

15. The electro-mechanical power door operating system (100) according to claim 2 wherein the control box (110) comprises an output device (184); and wherein the output device (184) preferably indicates an extended configuration of the strut (102), a retracted configuration of the strut (102), a locked configuration of the strut (102), and/or an unlocked configuration of the strut (102).
